# FASCICULE DE BREVET EUROPEEN

(11) **EP 2 049 872 B1**
(45) Date de publication et mention de la délivrance du brevet: **30.06.2010**
(21) Numéro de dépôt: 07823401.0
(22) Date de dépôt: 07.08.2007
(51) Int. Cl.: G01C 19/56

(54) **PROCEDE D'ALIGNEMENT D'UNE CENTRALE INERTIELLE A CAPTEUR VIBRANT AXISYMETRIQUE ET CENTRALE INERTIELLE CORRESPONDANTE**
VERFAHREN ZUR AUSRICHTUNG EINES TRÄGHEITSNAVIGATIONSSYSTEMS MIT EINEM ACHSENSYMMETRISCHEN VIBRIERENDEN SENSOR UND ENTSPRECHENDES TRÄGHEITSNAVIGATIONSSYSTEM
METHOD OF ALIGNING AN AXISYMMETRIC VIBRATING SENSOR INERTIAL NAVIGATION SYSTEM AND CORRESPONDING INERTIAL NAVIGATION SYSTEM

(30) Priorité: 09.08.2006 FR 0607230
(43) Date de publication de la demande: 22.04.2009
(73) Titulaire: SAGEM DEFENSE SECURITE, 75015 Paris (FR)
(72) Inventeur: CARON, Jean-Michel, F-95210 Saint-Gratien (FR)
(74) Mandataire: Lavialle, Bruno François Stéphane
(86) Numéro de dépôt international: PCT/FR2007/001349
(87) Numéro de publication internationale: WO 2008/023108

(56) Documents cités:
- EP-A- 1 445 580
- EP-A1- 0 810 418
- HONG S K: "Compensation of nonlinear thermal bias drift of Resonant Rate Sensor using fuzzy logic" SENSORS AND ACTUATORS A, ELSEVIER SEQUOIA S.A., LAUSANNE, CH, vol. 78, no. 2-3, 14 décembre 1999 (1999-12-14), pages 143-148, XP004252964 ISSN: 0924-4247

## Description

La présente invention concerne un procédé d'alignement d'une centrale inertielle à capteur vibrant axisymétrique, et une centrale inertielle correspondante comportant un capteur vibrant axisymétrique.

### ARRIERE PLAN DE L'INVENTION

On sait que pour déterminer l'orientation d'un porteur, en particulier pour assurer la navigation d'un avion, il est habituel d'utiliser une centrale inertielle comportant des capteurs vibrants axisymétriques tels que des capteurs vibrants à cloche hémisphérique ou des quapasons.

On sait également qu'un capteur vibrant axisymétrique est adapté à fonctionner en mode gyroscopique ou en mode gyrométrique. Dans le mode gyroscopique la vibration est entretenue mais sa position est laissée libre; lorsque l'orientation du porteur évolue, la position de la vibration par rapport à l'embase est représentative de l'angle dont le porteur a tourné.

Dans le mode gyrométrique, la vibration est entretenue et sa position par rapport à son embase est maintenue fixe par l'envoi d'une commande électronique appropriée; la valeur de cette commande est alors représentative de la vitesse de rotation du porteur dans l'espace inertiel.

EP-A-1 445 580 et EP-A-0 810 418 décrivent telles centrales inertielles à capteur vibrant axisymétrique.

En pratique, les capteurs vibrants axisymétriques sont utilisés pour la navigation selon le mode gyroscopique qui permet de bénéficier d'un facteur d'échelle (coefficient de Bryan) d'excellente qualité.

Une navigation se décompose en deux phases principales:
- une phase préparatoire dite d'alignement permettant de définir l'orientation géographique initiale de la centrale
- la navigation proprement dite pendant laquelle l'orientation géographique initiale sert de référence pour le calcul de l'orientation géographique instantanée et de la position du porteur.

La qualité de la navigation obtenue, et en particulier la précision de calcul du cap, est directement liée à l'erreur de dérive des gyroscopes équipant la centrale de navigation.

Les gyroscopes vibrants axisymétriques utilisés en mode gyroscopique présentent la particularité d'avoir une erreur de dérive qui est fonction de la position de la vibration par rapport à l'embase du capteur. Cette erreur de dérive est bien sûr modélisée et compensée mais cette compensation n'est pas parfaite. Il subsiste donc une erreur de dérive fonction de la position. Lors de l'utilisation de tels gyroscopes dans des centrales de navigation, cette erreur de dérive constitue l'une des causes d'erreur de la centrale.

En outre l'erreur de dérive varie également en fonction de la température et en fonction du temps.

L'invention est fondée sur deux constats:
1. l'erreur de dérive des gyroscopes pendant la phase d'alignement a une influence particulièrement importante sur la performance de navigation ;
2. pendant la phase d'alignement, le porteur ne change pas d'orientation.

Lorsque l'on démarre une centrale, la position initiale de la vibration est a priori quelconque et peut évoluer d'un démarrage à l'autre; l'erreur de dérive associée à la position de la vibration est donc variable et vient perturber la qualité de l'alignement.

### OBJET DE L'INVENTION

Un but de l'invention est de minimiser les effets de l'erreur de dérive sur les performances de navigation de la centrale inertielle.

### RESUME DE L'INVENTION

En vue de la réalisation de ce but, on proprose selon l'invention, un procédé d'alignement d'une centrale inertielle à capteur vibrant axisymétrique générant une vibration, le procédé comportant l'étape d'établir la vibration dans une position pour laquelle le capteur présente une variation d'erreur de dérive qui est minimisée par rapport à une variation de l'erreur de dérive pour d'autres positions de la vibration.

Cette procédure permet:
- de minimiser les erreurs d'alignement résultant de l'erreur de dérive du capteur
- d'améliorer la répétabilité de l'erreur de dérive d'un alignement à l'autre, ce qui permet de l'observer et donc de la compenser puisque la position de la vibration reste la même.

Selon une mise en oeuvre avantageuse du procédé selon l'invention, la sélection de la position de vibration commandée lors de la phase d'alignement est effectuée en prenant en compte essentiellement les variations de l'erreur de dérive en fonction de la température.

Selon un mode de mise en oeuvre préféré de l'invention, la sélection de la position de vibration pour la phase d'alignement est effectuée en prenant tout d'abord en compte les variations de l'erreur de dérive en fonction de la température puis les variations de l'erreur de dérive en fonction du temps.

Selon un autre aspect de l'invention, celle-ci concerne une centrale inertielle comportant un capteur vibrant axisymétrique, des moyens pour exciter le capteur pour générer une vibration, et des moyens pour établir la vibration dans une position pour laquelle une variation d'erreur de dérive est minimisée par rapport à une variation de l'erreur de dérive pour d'autres positions de la vibration.

### BREVE DESCRIPTION DES DESSINS

D'autres caractéristiques et avantages de l'invention apparaîtront à la lecture de la description qui suit d'un mode de mise en oeuvre particulier non limitatif de l'invention en référence aux figures ci-jointes parmi lesquelles :
- la figure 1 est une vue en coupe axiale schématique selon la ligne I-I de la figure 2 d'un capteur vibrant à cloche hémisphérique,
- la figure 2 est une vue en coupe selon la ligne II-II de la figure 1 avec un schéma par blocs illustrant un exemple de mise en oeuvre du procédé de l'invention.

### DESCRIPTION DETAILLEE DE L'INVENTION

En référence aux figures, le capteur vibrant à cloche hémisphérique illustré comporte de façon connue en soi une cloche en silice 1 montée sur une embase 2 également en silice, la cloche 1 étant entourée d'un boîtier étanche 3 permettant de mettre le capteur sous vide.

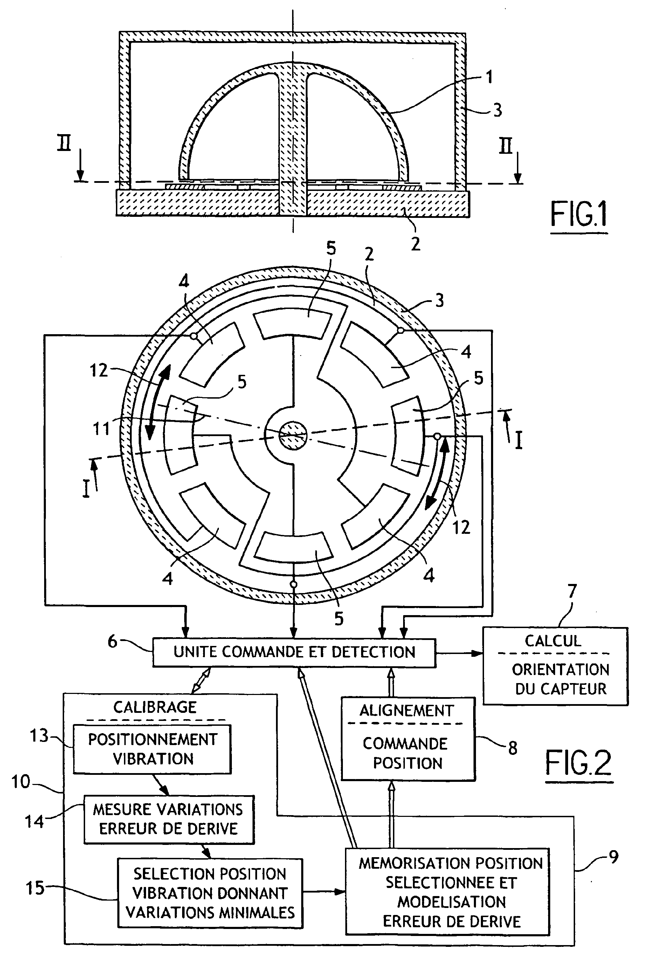

Egalement de façon connue en soi, la surface interne de la cloche 1 est métallisée ainsi que son bord inférieur et celui-ci s'étend en regard de deux paires d'électrodes de commande 4 et de deux paires d'électrodes de détection 5 convenablement reliées à une unité de commande et de détection 6 pour générer une vibration 11 illustrée par un trait mixte sur la figure 2 et dont la position peut être commandée par l'unité de commande 6.

De façon encore connue en soi, l'unité de commande et de détection 6 est reliée à un organe de calcul 7 de l'orientation du capteur à partir des signaux de détection reçus de l'unité de commande et de détection.

Selon l'invention la phase d'alignement est exécutée en excitant le capteur avec un signal de commande positionnant la vibration obtenue selon une position sélectionnée mémorisée dans un organe de mémorisation 9.

Dans l'exemple illustré, la position sélectionnée pour la mise en oeuvre de la phase d'alignement est déterminée lors d'une phase de calibrage 10 qui est de préférence réalisée en atelier et qui comporte les étapes suivantes : le capteur étant maintenu immobile, il est excité avec un signal de commande 13 selon différentes positions successives de la vibration symbolisées sur la figure 2 par une ligne en trait mixte 11 et des double flèches en trait épais 12. Pour chaque position de la vibration, on effectue une mesure 14 des variations de l'erreur de dérive en fonction de la température en amenant successivement le capteur à des températures différentes les unes des autres tout en maintenant constante la commande de position de la vibration. Les différente mesures de la position réelle obtenue sont mémorisées puis une comparaison est effectuée entre les variations de l'erreur de dérive pour effectuer une sélection 15 de la position donnant les variations minimales en fonction de la température.

Dans le cas où les variations de l'erreur de dérive en fonction de la température sont les mêmes pour plusieurs positions de la vibration, on prévoit selon un mode de mise en oeuvre préféré de l'invention d'effectuer pour chaque position de la vibration une nouvelle mesure à température constante et à des instants différents les uns des autres afin de relever les variations de l'erreur de dérive en fonction du temps, et de sélectionner une position donnant des variations minimales de l'erreur de dérive. La position finalement retenue est mémorisée dans l'organe de mémorisation de position 9 en vue d'être utilisée lors de chaque phase d'alignement. Lors de chaque phase d'alignement la vibration est établie directement dans la position mémorisée.

De préférence également, l'erreur de dérive, y compris ses variations, est modélisée en fonction de la température et en fonction du temps et la modélisation est mémorisée dans l'organe de mémorisation 9 pour être transmise à l'unité de commande et de détection 6 pour effectuer une correction des mesures relevées pendant la phase d'alignement.

Bien entendu, l'invention n'est pas limitée au mode de mise décrit et on peut y apporter des variantes de réalisation sans sortir du cadre de l'invention tel que défini par les revendications.

En particulier, bien que dans le mode de mise en oeuvre préféré il ait été prévu d'effectuer une sélection en priorité sur les variations de l'erreur de dérive en fonction de la température qui est généralement le paramètre le plus sensible, il est possible de prévoir une sélection de position directement selon les variations de l'erreur de dérive en fonction du temps ou au contraire de limiter la sélection à une position pour laquelle les variations sont minimales en fonction de la température.

Bien que l'invention ait été plus particulièrement décrite en relation avec un capteur vibrant à cloche hémisphérique, l'invention s'applique à tout capteur vibrant axisymétrique utilisé en mode gyroscopique, en particulier un quapason.

Bien que l'invention ait été décrite avec une phase de calibrage préalable, la position de la vibration pour la phase d'alignement peut être choisie au départ de façon aléatoire puis modifiée après un nombre de navigations permettant d'effectuer une analyse statistique de l'erreur de dérive pour différentes positions dans lesquelles la vibration est établie lors de phases d'alignement successives, et de comparer les résultats obtenus pour retenir finalement la position optimale lors de la phase d'alignement.

## Revendications

1. Procédé d'alignement d'une centrale inertielle à capteur vibrant axisymétrique générant une vibration **caractérisé en ce qu'**il comporte l'étape d'établir la vibration dans une position pour laquelle le capteur présente une variation d'erreur de dérive qui est minimisée par rapport à une variation de l'erreur de dérive pour d'autres positions de la vibration.

2. Procédé selon la revendication 1, **caractérisé en ce qu'**il comporte une phase de calibrage (10) comportant les étapes d'exciter le capteur pour commander la vibration selon des positions successives (13) différentes les unes des autres et à des températures différentes les unes des autres, de mesurer pour chaque position de la vibration des variations (14) de l'erreur de dérive en fonction des températures et de sélectionner (15) une position pour laquelle les variations de l'erreur de dérive sont minimales.

3. Procédé selon la revendication 1, **caractérisé en ce qu'**il comporte une phase de calibrage (10) comportant les étapes d'exciter le capteur pour commander la vibration selon des positions successives (13) différentes les unes des autres à une température constante, de mesurer pour chaque position des variations (14) de l'erreur de dérive à des instants différents les uns des autres, et de sélectionner (15) une position pour laquelle les variations de l'erreur de dérive sont minimales.

4. Procédé selon la revendication 1, **caractérisé en ce qu'**il comporte une phase de calibrage (10) comportant les étapes d'exciter le capteur pour commander la vibration selon des positions successives (13) différentes les unes des autres et à des températures différentes les unes des autres, de mesurer pour chaque position de la vibration des variations de l'erreur de dérive en fonction des températures, de sélectionner des positions pour lesquelles les variations (14) de l'erreur de dérive sont minimales, de mesurer pour les positions retenues des variations (14) de l'erreur de dérive à des instants différents les uns des autres, et de sélectionner une position pour laquelle les variations de l'erreur de dérive en fonction des instants sont minimales.

5. Procédé selon la revendication 1, **caractérisé en ce qu'**il comporte une phase de calibrage comportant les étapes de modéliser les erreurs de dérive et de déterminer une correction de l'erreur de dérive.

6. Centrale inertielle comportant un capteur vibrant axisymétrique, des moyens (6) pour exciter le capteur pour générer une vibration, **caractérisé en ce qu'**il comporte des moyens (8) pour établir la vibration dans une position pour laquelle le capteur présente une variation d'erreur de dérive qui est minimisée par rapport à une variation de l'erreur de dérive pour d'autres positions de la vibration.

7. Centrale inertielle selon la revendication 6, **caractérisé en ce qu'**il comporte un organe de mémorisation (9) de la position pour laquelle le capteur présente une erreur de dérive ayant des variations minimales.

8. Centrale inertielle selon la revendication 7, **caractérisé en ce qu'**il comporte des moyens de mémorisation (9) d'une modélisation de l'erreur de dérive et des moyens (6) pour réaliser une correction de l'erreur de dérive.

## Claims

1. A method of aligning an inertial unit having an axially symmetrical vibrating sensor that generates a vibration, the method being **characterized in that** it includes the step of establishing the vibration in a position for which the sensor presents drift error variation that is minimized relative to the drift error variations for other positions of the vibration.

2. A method according to claim 1, **characterized in that** it includes a calibration stage (10) comprising the steps of exciting the sensor to control vibration in successive mutually-different positions (13) and at mutually-different temperatures, and for each vibration position, of measuring variations (14) in drift error as a function of temperature, and of selecting (15) a position for which variations in drift error are the smallest.

3. A method according to claim 1, **characterized in that** it includes a calibration stage (10) comprising the step of exciting the sensor to cause vibration to take place in successive mutually-different positions (13) at constant temperature, and for each position, of measuring variations (14) in drift error at mutually-different instants, and of selecting (15) a position for which the variations in drift error are the smallest.

4. A method according to claim 1, **characterized in that** it includes a calibration stage (10) comprising the steps of exciting the sensor to cause it to vibrate in successive mutually-different positions (13) at mutually-different temperatures, of measuring, in each vibration position, variations in the drift error as a function of temperature, of selecting positions for which the variations (14) in drift error are the smallest, in measuring, for those positions, the variations (14) in drift error at mutually-different instants, and in selecting a position for which the variations in drift error as a function of the instants are the smallest.

5. A method according to claim 1, **characterized in that** it includes a calibration stage comprising the steps of modeling the drift errors and of determining a drift error correction.

6. An inertial unit comprising an axially symmetrical vibrating sensor, and means (6) for exciting the sensor to generate vibration, the unit being **characterized in that** it further comprises means (8) for establishing vibration in a position for which the sensor presents variation in drift error that is the smallest compared with variation in drift error for other positions of the vibration.

7. An inertial unit according to claim 6, **characterized in that** it includes a memory member (9) for storing the position in which the sensor presents drift error having the smallest variations.

8. An inertial unit according to claim 7, **characterized in that** it includes memory means (9) for storing a model of drift error and means (6) for producing a drift error correction.

## Patentansprüche

1. Verfahren zur Ausrichtung eines Trägheitsnavigationssystems mit einem achsensymmetrischen Schwingungssensor, der eine Schwingung erzeugt, **dadurch gekennzeichnet, dass** es den Schritt umfasst: Erzeugen der Schwingung in einer Position, für die der Sensor eine Driftfehler-Schwankung aufweist, die in Bezug auf eine Driftfehler-Schwankung für andere Positionen der Schwingung minimiert ist.

2. Verfahren nach Anspruch 1, **dadurch gekennzeichnet, dass** es eine Kalibrierungsphase (10) umfasst, die aus den Schritten besteht: Erregen des Sensors, um die Schwingung gemäß aufeinanderfolgenden, zueinander unterschiedlichen Positionen und bei zueinander unterschiedlichen Temperaturen zu steuern (13), Messen (14) der Schwingung von Schwankungen des Driftfehlers in Abhängigkeit der Temperaturen für jede Position und Auswählen (15) einer Position, für die die Schwankungen des Driftfehlers minimal sind.

3. Verfahren nach Anspruch 1, **dadurch gekennzeichnet, dass** es eine Kalibrierungsphase (10) umfasst, die aus den Schritten besteht: Erregen des Sensors, um die Schwingung gemäß aufeinanderfolgenden, zueinander unterschiedlichen Positionen (13) bei konstanter Temperatur zu steuern, Messen (14) der Schwankungen des Driftfehlers zu zueinander unterschiedlichen Zeitpunkten für jede Position und Auswählen (15) einer Position, für die die Schwankungen des Driftfehlers minimal sind.

4. Verfahren nach Anspruch 1, **dadurch gekennzeichnet, dass** es eine Kalibrierungsphase (10) umfasst, die aus den Schritten besteht: Erregen des Sensors, um die Schwingung gemäß aufeinanderfolgenden, zueinander unterschiedlichen Positionen (13) und bei zueinander unterschiedlichen Temperaturen zu steuern, Messen der Schwingung der Driftfehler-Schwankungen in Abhängigkeit der Temperaturen für jede Position, Auswählen von Positionen, für die die Schwankungen (14) des Driftfehlers minimal sind, Messen der Schwankungen (14) des Driftfehlers zu unterschiedlichen Zeitpunkten für die in Betracht gezogenen Positionen und Auswählen einer Position, für die die Schwankungen des Driftfehlers in Abhängigkeit von den Zeitpunkten minimal sind.

5. Verfahren nach Anspruch 1, **dadurch gekennzeichnet, dass** es eine Kalibrierungsphase umfasst, die aus den Schritten besteht: Modellieren der Driftfehler und Bestimmen einer Korrektur des Driftfehlers.

6. Trägheitsnavigationssystem, umfassend einen achsensymmetrischen Schwingungssensor, Mittel (6) zum Erregen des Sensors zum Erzeugen einer Schwingung, **dadurch gekennzeichnet, dass** es Mittel (8) umfasst, um die Schwingung in einer Position zu erzeugen, für die der Sensor eine Driftfehler-Schwankung aufweist, die in Bezug auf eine Driftfehler-Schwankung für andere Positionen der Schwingung minimal ist.

7. Trägheitsnavigationssystem nach Anspruch 6, **dadurch gekennzeichnet dass** es ein Speicherelement (9) zum Speichern der Position umfasst, für die der Sensor einen Driftfehler aufweist, der minimale Schwankungen hat.

8. Trägheitsnavigationssystem nach Anspruch 7, **dadurch gekennzeichnet, dass** es Speichermittel (9) zum Speichern einer Modellierung des Driftfehlers und Mittel (6) zum Durchführen einer Korrektur des Driftfehlers umfasst.
